# EUROPEAN PATENT APPLICATION

(11) **EP 2 479 698 A1**
(43) Date of publication of application: **25.07.2012**
(21) Application number: 12151325.3
(22) Date of filing: 16.01.2012
(51) Int. Cl.: G06F 21/00

(54) **Systems and methods for detecting fraud associated with systems application processing**

(30) Priority: 19.01.2011 US 201113009656
(71) Applicant: General Electric Company, Schenectady, NY 12345 (US)
(72) Inventor: Lakshminarayanan, Sitaraman Suthamali, Atlanta GA 300067 (US)
(74) Representative: Cleary, Fidelma

(57) **Abstract**

Systems and methods for detecting fraud associated with systems application processing are provided. An example method may include: for each of at least a subset of multiple application services 110a-110n, receiving an audit log message 130 indicating a respective point in an execution path associated with execution of the application services 110a-110n; and prior to executing an application service endpoint 110d of the application services 110a-110n, analyzing the received audit log messages 130 to determine whether the execution path satisfies at least one predefined expected execution path.

## Description

### FIELD OF THE INVENTION

Embodiments of the invention relate generally to fraud detection, and more specifically to systems and methods for detecting fraud associated with systems application processing.

### BACKGROUND OF THE INVENTION

Computer application security continues to be a major concern. With distributed computing, messages are generated and exchanged between system components and system application software modules. These messages may contain sensitive information or important data that is critical to the operation of the system. In a distributed computing environment where messages are exchanged between individual software applications and/or between entirely different systems, conventional message assurance techniques utilize a combination of services, including access control and user privileges, digital signatures of individual messages, time stamping, as well as network-based security, such as Internet Protocol ("IP") security and digital firewall utilities. For example, existing message assurance techniques analyze a message's digital signatures upon receipt of the message and/or limit message transmission over a network utilizing IP security and secure firewalls.

However, these techniques do not prevent a valid system user, such as a power user or administrator, from impersonating a system and sending an altered or fraudulent message with appropriate digital signatures and network credentials. In addition, these current message assurance techniques are generally reactive in nature, reporting or investigate after a security incident happens. These solutions generally do not prevent fraudulent message communications before they happen.

Accordingly, there is a need for systems and methods for detecting fraud associated with systems application processing.

### BRIEF DESCRIPTION OF THE INVENTION

Embodiments of the invention can address some or all of the needs described above. Embodiments may include systems, methods, and apparatus for detecting fraud associated with system application processing. According to one aspect, the invention resides in a method for detecting fraud associated with systems application processing. The method may include: executing a software-based operation causing execution of multiple application services, each associated with a respective one of one or more system applications, wherein the execution of the application services defines an execution path for the software-based operation. The method further includes: generating an audit log for each of at least a subset of the application services in association with the execution of the respective application service to at least partially represent the execution path for the software-based operation; and, prior to execution of at least one of the application services, analyzing each of the audit logs previously generated while executing the software-based operation to determine whether the execution path for the software-based operation satisfies at least one predefined expected execution path.

According to another aspect, the invention resides in a system for detecting fraud associated with systems application processing. The system may include: a message assurance server including at least one processor and in communication over a network with at least one system application that includes multiple application services for performing at least one software-based operation. The message assurance server can be operable to: receive an audit log message indicating a respective point in an execution path associated with execution of the application services for each of at least a subset of the application services; and analyze each of the received audit logs prior to executing at least one of the application services to determine whether the execution path for the software-based operation satisfies at least one predefined expected execution path.

Additional systems, methods, apparatus, features, and aspects are realized through the techniques of various embodiments of the invention. Other embodiments and aspects of the invention are described in detail herein and are considered a part of the claimed inventions. Other embodiments, features, and aspects can be understood with reference to the description and the drawings.

### BRIEF DESCRIPTION OF THE DRAWINGS

Embodiments of the present invention will now de described, by way of example only, with reference to the accompanying drawings in which:
FIG. 1 is a block diagram of an example system for detecting fraud, according to one embodiment.
FIG. 2 is a flow diagram of an example method for configuring a fraud detection system, according to one embodiment.
FIG. 3 is a flow diagram of an example method for detecting fraud, according to one embodiment.

### DETAILED DESCRIPTION OF THE INVENTION

Illustrative embodiments of the invention now will be described more fully hereinafter with reference to the accompanying drawings, in which some, but not all embodiments of the invention are shown. Indeed, the inventions may be embodied in many different forms and should not be construed as limited to the embodiments set forth herein; rather, these embodiments are provided so that this disclosure will satisfy applicable legal requirements. Like numbers refer to like elements throughout.

In a distributed system that has multiple computing components, messages are exchanged from one system or system application to another either directly or through various intermediary systems or system applications. Messages exchanged may be utilized to transmit data for use by the recipient system application or to issue a command to perform an action at or in association with the recipient system application.

One example distributed system may be a smart grid system, which includes a number of system applications and other applications and sub-systems communicating and transacting over one or more networks. Each of the system applications (or applications associated with sub-systems, etc.) may have one or more application services (e.g., software modules, functional modules, etc.) which, when executed (or otherwise called) to perform the respective operations, cause messages to be exchanged therebetween and with system applications of other system applications. Accordingly, a system can refer to a collection of various system applications, and/or sub-systems, each of which may have one or more application services that are exposed and can be executed for integration and/or interoperability therebetween. It is further appreciated that, in some instances, a system may call or otherwise utilize application services associated with a system application and/or a different system or sub-system that may not be directly associated with or a part of the same system. Example system applications within a smart grid system may include, but are not limited to, energy management systems ("EMS"), supervisory data acquisition and control ("SCADA") systems, distribution management systems ("DMS"), outage management systems ("OMS"), network management systems, geospatial information systems ("GIS"), meter interface systems, advanced metering infrastructure ("AMI") systems, customer information systems, accounting and billing systems, reporting and monitoring systems, distributed resource management systems ("DRMS"), integration and middleware systems, and the like. It is appreciated that, while a smart grid system is described by example herein, the embodiments described herein may be adapted to be operable with any number of distributed computing systems, such as plant control systems, information management systems, information security systems, fmancial systems, network and communications control systems, defense and security systems, and the like. The illustrative examples described herein are not limiting.

In conventional distributed systems, message integrity may be verified utilizing digital signature and/or network security mechanisms. However, these techniques provide no guarantee that a message took the necessary path of execution or that the expected system applications or application services were executed as expected prior to arrival at the recipient application or service, as defined by the respective system architects and programmers. When an operation does not follow the expected sequence of events, it is possible that one or more messages were intercepted and altered by someone in the middle (such as by eavesdropping and replaying or transmitting an altered message) or by a power user (e.g., a user with sufficient privileges and security credentials) with knowledge of access to information thus allowing the user to post messages and bypass various sequences of events which would be expected and which may have an impact on system operations and/or security.

Certain embodiments described herein can prevent the unauthorized posting of messages without being initiated by authorized software or by following necessary sequence of pre defined paths. Authorized system application and associated services execution and message generation and communication can be validated by verifying the execution sequence and message path (herein generally referred to as the "execution path") against one or more predetermined expected execution paths and sequence of events. To do so, at various stages during the system application operation, such as one or more of the associated application services, audit logs are generated that capture information associated with the specific application service being executed. Together, the audit logs represent the execution path as the operations proceed. Prior to the execution of one or more of the application services, such as at an endpoint service or other critical or highly sensitive application service, the previously generated and stored audit logs are verified against the expected execution path for the associated system operation. For example, according to one embodiment, prior to execution of an application service endpoint, the application service may include application programming that accesses the audit log data to analyze the previous execution path. In another embodiment, the application service may issue a request for validation of the execution path performed by a central server, halting operations until a positive response is received that at least one of the predetermined expected operation paths is satisfied. It is possible that more than one execution path may be acceptable. Each of the expected execution paths are predetermined and stored in memory in association with the software-based operation being performed. If it is determined that each of the points in the expected execution path have not been executed according to the audit logs, then it may be assumed that the system operations did not follow authorized sequence and thus indicating possible fraudulent activity.

Audit log files may also include time stamps that indicate the duration between operations. The predetermined expected execution paths may likewise define time interval thresholds that indicate expected or threshold durations between operations, which when violated would indicate a potential fraudulent operation. Thus, as part of analyzing the audit log files, the time stamp or time interval information can be compared to the time interval thresholds to determine whether excess time was taken to deliver the message or perform the associated operation, which would indicate a potential fraudulent operation.

Accordingly, the embodiments described herein allow verifying the exact operations of the system application or applications and the messages' execution paths to identify potential fraud, validating what operations were executed, what paths the messages took, who sent the messages or executed the operations, how long the individual operations took, and the like. Thus, an increased level of message assurance can be achieved, which allows preventing message replay attacks, message interception, system impersonation, and other message tampering activities.

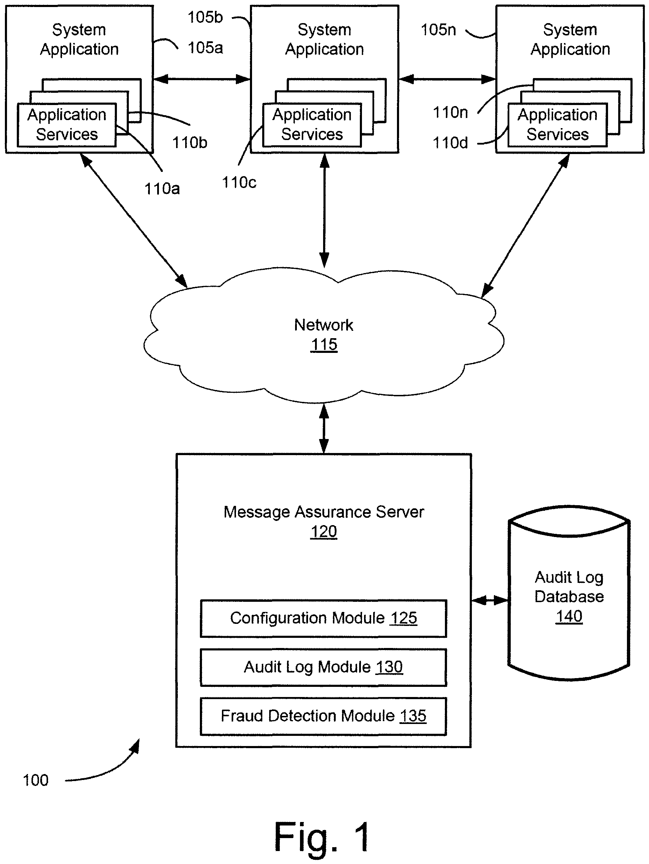

Example embodiments are now described with reference to FIGS. 1-3.

FIG. 1 is a block diagram of an example distributed computing system 100 according to one embodiment. The distributed computing system 100 can include multiple system applications 105a-105n, whereby each system application 105a-105n includes multiple application services 110a-110n (which generally refer to a software module or collection of modules). Each of the multiple application services 110a-110n are executable to perform the software-based operations of the respective system application 105a-105n. It is appreciated that each of the multiple system applications 105a-105n and the respective application services 110a-110n may be operable to perform any number of different software-based operations, which may depend upon the sequence of executing the various application services 110a-110n and/or the data, commands, or other instructions exchanged between the various application services 110a-110n during execution. Each system application 105a-105n may be associated with a different system, program, or product of the overall distributed computing system 100, or, in some instances, multiple system applications 105a-105n may be associated with the same system, program, or product of the distributed computing system. Each system application 105a-105n may reside and be executed on a different physical computer system, or, in some embodiments, multiple system applications 105a-150n may reside on the same computer system. As described above, the distributed computing system 100, in one example, may be associated with a smart grid computing system, whereby each of the system applications are configured to perform different functions within the smart grid computing system. However, the distributed computing system 100 is not limited to a smart grid computing system, but instead may generally refer to any computing system configured to execute one or more application services that transmit messages, data, or commands between the application services during execution to perform one or more specific software-based operations.

Each of the system applications 105a-105n, and thus application services 110a-110n, are in communication over a network 115 with a message assurance server 120. One or more of the system applications 105a-105n may be in communication with each other, either directly or over the network 115. The message assurance server 120 may be embodied as any computer system that includes one or more processors and memory operable to store and execute programming instructions (e.g., software or other computer-executable instructions) to facilitate the fraud detection operations described herein. By executing computer-executable instructions, the message assurance server 120 may include or form a special purpose computer or particular machine that facilitates the detection of fraudulent operations occurring within the distributed computing system 100.

Example programming instructions stored in the memory and executable by the one or more processors of the message assurance server 120 may include a configuration module 125, an audit log module 130, and a fraud detection module 135, each operable to facilitate in part the fraud detection operations, as further described herein. The memory also may include an operating system, which is utilized by the processor to execute the programming instructions of the message assurance server 120. The message assurance server 120 may further include one or more data storage devices, such as an audit log database 140, which may be operable to store audit log files received during the execution of individual application services 110a-110n and, optionally, to store data utilized by the fraud detection module 135 and generated by the configuration module 125, such as, but not limited to, audit log files, predefined expected execution paths and time interval thresholds associated with the execution of one or more application services 110a-110n, user privilege information, fraud alert message templates, and the like.

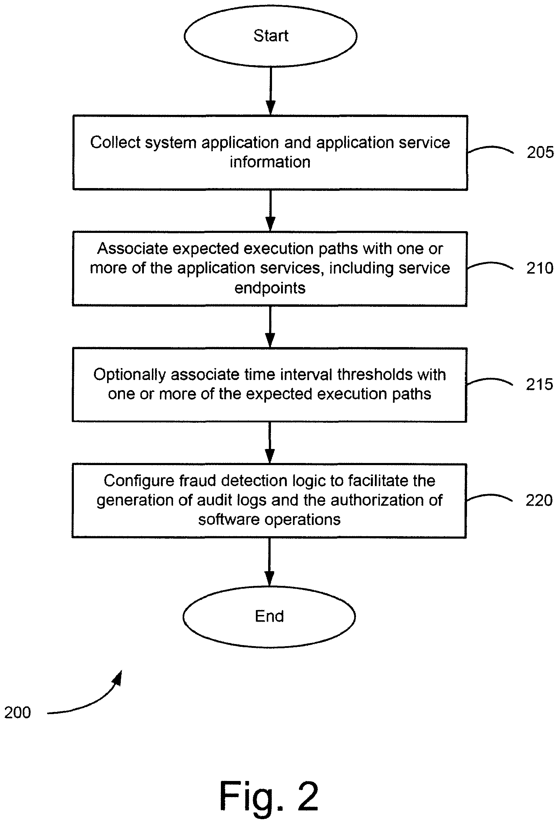

More specifically, the configuration module 125 may include programming instructions operable to facilitate configuration of the fraud detection operations, such as, but not limited to: collecting or otherwise defining system application 105a-105n and associated application service 110a-110n information; defining one or more expected execution paths; associating one or more expected execution paths with application services 110a-110n; defining time interval thresholds for executing various sequences of system application 105a-105n and application system 110a-110n operations; associating the time interval thresholds with application services 110a-110n; defining fraud detection logic to generate or otherwise capture and analyze audit log information associated with the execution of one or more of the application services 110a-110n, which may be executable, at least in part, by one or more of the application services 110a-110n, and/or which may be executable, at least in part, by the message assurance server 120; and the like. Accordingly, in one embodiment, the configuration module 125 may be operable to define, generate, and present user interfaces to present and capture information from a user in association with configuring the fraud detection operations described herein. In some embodiments, many aspects performed by the configuration module may be performed during the development, generation, and programming of the respective system applications 105a-105n, such as by a system architect or software programmer. More details regarding example operations of the configuration module 125 are provided with reference to FIG. 2 herein.

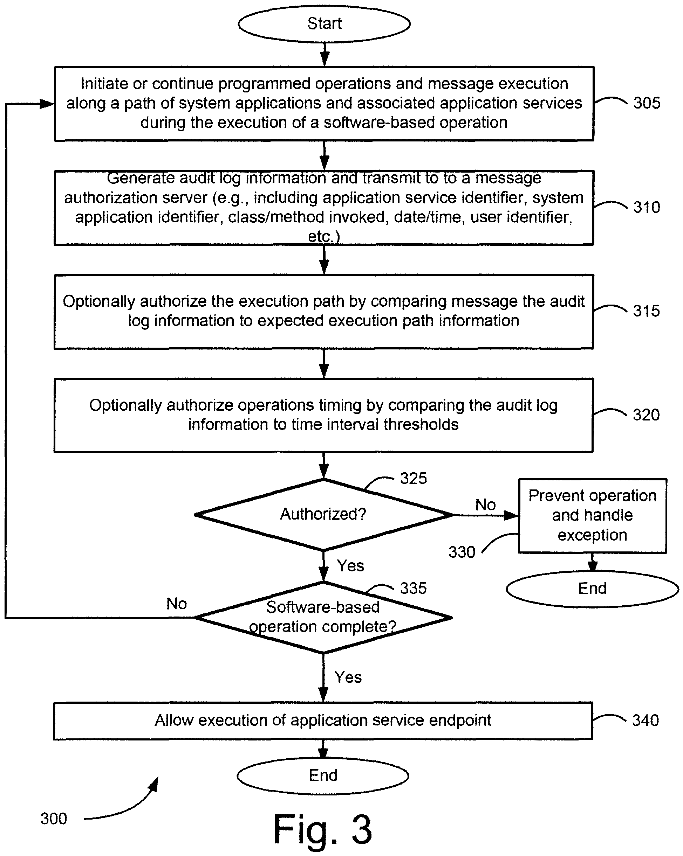

The audit log module 130 may include programming instructions operable to facilitate the generation and storage of audit log files by one or more of the application services 110a-110n. For example, according to one embodiment, the audit log module 130 may be operable to receive audit log files during the execution of one or more application services 110a-110n over the network 115 and to store the audit log files in memory, such as in the audit log database 140. Additional details regarding example operations of the audit log module 130 are provided with reference to FIG. 3 herein.

The fraud detection module 135 may include programming instructions operable to facilitate the analysis of the audit log information to determine whether the execution path and associated operations satisfy at least one predetermined expected execution path and/or one or more time interval thresholds for the application service 110a-110n being analyzed. According to one embodiment, at least some aspects performed by the fraud detection module may be performed by the application service 110a-110n being analyzed. For example, prior to execution of the intended operations of an application service 110a-110 (e.g., an application service endpoint), the application service 110a-110n may include programming instructions to issue a command to the message assurance server 120 over the network 115 to retrieve audit log files and expected execution path information for analysis prior to completing execution of the expected operations. In another embodiment, an application service 110a-110n may instead issue a command to the message assurance server 120 to analyze the audit log files and make an authorization determination by the message assurance server 120, which can in return reply with a fraud status, indicating whether the operations are authorized so the application service 110a-110n can proceed. The fraud detection module 135 may be accessed and executed prior to completing execution of some or all of the application services 110a-110n associated with a given software-based operation. Additional details regarding example operations of the fraud detection module 135 are provided with reference to FIG. 3 herein.

The message assurance server 120 may further include a data bus operable for providing data communication between the memory and the one or more processors. Users (e.g., systems operator or configurations personnel, security personnel, etc.) may interface with the message assurance server 120 via at least one user interface device, such as, but not limited to, a keyboard, mouse, control panel, or any other devices capable of communicating data to and from the computer system. The message assurance server 120 may further include one or more suitable network interfaces, such as a network card or other communication device, which facilitate connection of the message assurance server 120 to one or more suitable networks, such as the network 115, allowing communication with each of the computer systems operating the system applications 105a-105n. Additionally, it should be appreciated that other external devices, such as other computer systems within the distributed computing system 100 and/or other components or machinery, may be in communication with the message assurance server 120 via a network interface. Accordingly, the message assurance system 120 and the programming instructions implemented thereby may include software, hardware, firmware, or any combination thereof. It should also be appreciated that multiple computers may be used together, whereby different features described herein may be executed on one or more different computers.

The network 115 may include any number of telecommunication and/or data networks, whether public, private, or a combination thereof, such as, but not limited to, a local area network, a wide area network, an intranet, the Internet, intermediate handheld data transfer devices, public switched telephone networks, and/or any combination thereof, any of which may be wired and/or wireless. Due to network connectivity, various methodologies described herein may be practiced in the context of distributed computing environments. Although the distributed computing system 100 is shown for simplicity as including one network 115, it is to be understood that any other network configuration is possible, which may optionally include a plurality of networks, each with devices such as gateways and routers, for providing connectivity between or among networks.

Each of the system applications 105a-105n and associated application services 110a-110n can be executed by a computer system having the same or similar components and operations as described with reference the message assurance server 120 above.

Those of ordinary skill in the art will appreciate that the distributed computing system 100 shown in and described with respect to FIG. 1 is provided by way of example only. Numerous other operating environments, system architectures, and device configurations are possible. Other system embodiments can include fewer or greater numbers of components and may incorporate some or all of the functionality described with respect to the system components shown in FIG. 1. Accordingly, embodiments of the invention should not be construed as being limited to any particular operating environment, system architecture, or device configuration.

FIG. 2 is a flow diagram of an example method 200 for configuring a fraud detection system, according to an illustrative embodiment. The method 200 may be utilized in association with one or more distributed computing systems, such as the distributed computing system 100 described with reference to FIG. 1. For example, aspects of the method 200 may be performed at least in part by a user interfacing with a configuration module 125 of an message assurance server 120, also described with reference to FIG. 1.

The method 200 may begin at block 205, in which information regarding each of the system applications 105a-105n and associated application services 110a-110n is collected and stored, such as in the audit log database 140. System application information may include, but is not limited to, information associated with: the application (e.g., a system application identifier, etc.); the software being executed; the function of the software; other system applications with which the system application may interface; the computer system on which the system application is stored and executed; user information (e.g., identifiers of authorized users, identifiers of users executing program instances, etc.); each application service 110a-110n associated with the system application, and the like. Similarly, application service information may include, but is not limited to, information associated with: the system application 105a-105n with which the application service is associated (e.g., a system application identifier, etc.); the application service (e.g., an application service identifier, etc.); the function of the application service; other application services and/or system applications with which the application service may interface; software classes involved; software methods involved; expected data types and/or message content; a date of execution of the service; a time of execution of the service; user information (e.g., identifiers of authorized users, identifiers of users executing program instances, etc.); and the like. It is appreciated that the aforementioned examples of system application and application service information is provided for illustrative purposes only and is not limiting. Any suitable information associated with system application and/or application services, and the execution thereof, may be gathered and utilized during the fraud detection operations described herein.

Following block 205 is block 210, in which one or more expected execution paths are entered and associated with one or more of the application services 110a-110n. In some embodiments, execution paths may not be associated with every application service 110a-110n, but only a subset, such as with an application service endpoint and/or with other critical and/or data sensitive application services. It is further appreciated that, in some embodiments, an application service 110a-110n may have more than one expected execution path associated therewith, such as if the application service is executed in association with more than one software-based operation (e.g., reached through the execution of different combinations of other application services, etc.). An expected execution path may provide details regarding one or more application services 110a-110n and/or one or more system applications 105a-105n that should be executed prior to executing the instant application service 110a-110n. For example, for each software-based operation that is to utilize one or more application services 110a-110n for which fraudulent activity is to be detected (noting that it is not necessary to detect fraudulent activity for some operations), an expected execution path will identify each of, or at least a subset of, the application services 110a-110n (or system applications 105a-105n) that are to be executed to prior to the instant application service 110a-110n being analyzed. The expected execution path thus represents the sequence of operations for the specific software-based operation being performed as designed and expected. In some embodiments, the expected execution path information may only identify the immediately preceding application service 110a-110n, which may assume that fraudulent activity occurring in earlier operations would be detected prior to the execution of an earlier application service 110a-110n according to the same or similar techniques. It is further appreciated that, in some embodiments, each and every application service 110a-110n executed or operation performed is not required to be indicated by the expected execution path, but that in some embodiments only a subset of operations are identified, allowing for the omission of operations that are not critical to security or successful operation or the omission of operations for which there may be a large number of variants, for example. Moreover, for some application services 110a-110n, there may be more than one expected execution path, such as when the application service 110a-110n can be accessed or called by multiple different application services or system applications, which may differ for different software-based operations being performed. In these cases, only one of the multiple expected execution paths are to be satisfied.

Each expected execution path information may be stored in the audit log data base 140, and may be associated with a software-based operation generally, or with an application service 110a-110n or a system application 105a-105n, or any combination thereof. For example, a table or other data structure may include references to application services 110a-110n and, for each application service 110a-110n, references to one or more application services 110a-110n (and/or system applications 105a-105n) that are to be executed prior to the executing of the respective application service 110a-110n being analyzed. Thus, according to this embodiment, when an application service 110a-110n is being analyzed (e.g., a service endpoint or other service making a call to the message assurance server 120 prior to completing its operations), the expected execution path can be identified for that specific application service 110a-110n. In other embodiments, however, a table or other data structure may store execution path information that identifies the entire execution path for a specific software-based operation, and is not directly associated with a particular application service within the operation. Thus, in this embodiment, when a particular application service 110a-110n is being analyzed (e.g., a service endpoint making a call to the message assurance server 120 prior to completing its operations), the expected execution path for the entire operation is identified, such as by referencing against the general software-based operation being performed instead of initially referencing the instant application service 110a-110n being executed. In one embodiment, audit log information and expected execution paths are analyzed only for application service endpoints, and thus need only be associated with application service endpoints when created and stored. In other embodiments, however, audit log information and expected execution paths can be analyzed for intermediate application services as well. It is appreciated that the aforementioned expected execution path configurations are provided for illustrative purposes, and that any suitable means for storing and associating expected execution path operations with an operation or application service being performed may be utilized.

Following block 210 is block 215, in which time interval thresholds are defined and associated with one or more of the expected execution paths stored. A time interval threshold may be utilized to define a maximum (or other predefined amount of time) duration allowable between the execution of two application services 110a-110n, assuming that operations exceeding the threshold indicate a potential fraudulent activity. In some embodiments, multiple time interval thresholds may be defined for a particular software-based operation, such that during the sequence of executing multiple application services 110a-110n certain multiple time interval thresholds are expected to be met. Time interval thresholds may be, but are not required to be, defined between two contiguous operations (e.g., between a first operation and the immediately subsequent operation to be executed). In other embodiments, time interval thresholds may be defined between two non-contiguous operations, such as between two applications services 110a-110n for which one or more intermediate application services are executed.

Following block 215 is block 220, in which programming instructions may be configured to generate fraud detection logic to facilitate the capturing and analysis of the audit log information to determine whether the execution path and associated operations satisfy at least one predetermined expected execution path and/or time interval thresholds for the application service 110a-110n being analyzed. According to one embodiment, at least some aspects of the fraud detection logic, which may be embodied as one or more fraud detection modules, may be performed by or in association with the application service 110a-110n being analyzed. For example, prior to execution of the intended operations of an application service 110a-110 (e.g., an application service endpoint), the application service 110a-110n may include programming instructions to issue a command to retrieve audit log files and expected execution path information from the message assurance server 120 over the network 115 for analysis prior to completing execution of the expected operations. In another embodiment, an application service 110a-110n may instead issue a command to the message assurance server 120 to cause analysis of the audit log files and a determination to be made by the message assurance server 120, which can in return reply with a fraud status, such as indicating whether the operations are authorized so the application service 110a-110n can proceed. It is thus appreciated that, according to various embodiments, the fraud detection logic may be provided according to any number of suitable configurations, such as entirely within respective application services 110a-110n, entirely within the message assurance server 120, entirely or at least partially within another software module and/or computer system operable to be executed in association with the respective application services 110a-110n, or any combination thereof. The fraud detection logic may be provided for some or all of the application services 110a-110n associated with a given software-based operation. Additional details regarding example operations of the fraud detection logic are provided with reference to FIG. 3 herein.

The method 200 may end after block 220, having configured respective system applications 105a-105n, application services 110a-110n, and/or the message assurance server 120 to facilitate the analysis and validation of application service execution associated with a given software-based operation.

FIG. 3 is a flow diagram of an example method 300 for detecting fraud, according to an illustrative embodiment. The method 300 may be utilized in association with one or more distributed computing systems, such as the distributed computing system 100 described with reference to FIG. 1. For example, aspects of the method 300 may be performed at least in part during the execution of one or more system applications 105a-105n and associated application services 110a-110n as part of a particular software-based operation, also described with reference to FIG. 1. During execution of certain application services 110a-110n, operational information, such as audit log files and execution path information are analyzed to detect whether there is a possibility that fraudulent services have occurred.

The method 300 may begin at block 305, in which programmed operations and message execution performed during the execution of a particular software-based operation occur. Block 305 depicts the general initiation, or the continued operations, of a particular software-based operation that is performed by one or more system applications 105a-105n and associated application services 110a-110n. As described herein, the software-based operation may be any software operation performed by a distributed computing system for which message assurance and fraud detection is desired to be performed. As the software-based operation is performed, each application service 110a-110n defines a separate point along the execution path for the software-based operation. As previously explained, operations and/or message authenticity can be validated prior to the execution of one or more of these application services based on predetermined expected execution paths associated with the software-based operation. Thus, the method 200 illustrates the operations that can be performed in association with (e.g., prior to) the execution of one application service 110a-110n, which can be repeated for multiple application services 110a-110n, as illustrated by decision block 335.

Following block 305 is block 310, in which one or more audit log files are generated for the respective application service 110a-110n being executed and transmitted to a centralized server over a network, such as the message assurance server 120 over the network 115 described with reference to FIG. 1. An audit log file may include information that can be utilized to capture information associated with the specific point in the execution path and to perform fraud detection in association with the respective application service 110a-110n or a subsequent application service 110a-110n performed along the execution path of the software-based operation. Audit log information may be any information suitable to identify the particular application service 110a-110n being executed and, optionally, any additional information desired with respect to associated application services 110a-110n (e.g., the service being executed, a prior application service, and/or a subsequent application service, etc.), associated system applications 105a-105n, or any other information associated with the software-based operation. Example audit log file information may include, but is not limited to, information associated with: the software-based operation being performed; the function of the software-based operation; the associated system application (e.g., a system application identifier, etc.); other system applications with which the system application may interface; the application service being executed (e.g., an application service identifier, etc.); the function of the application service; the application service calling the application service being executed; the application service to be called by the application service being executed; each other application service associated with the system application, the other application services, and/or system applications with which the application service may interface; software classes involved; software methods involved; expected data types and/or message content; a date of execution of the service; a time of execution of the service; the computer system on which the system application is stored and executed; user information (e.g., identifiers of authorized users, identifiers of users executing program instances, user privileges, etc.); and the like. It is appreciated that the aforementioned audit log information is provided for illustrative purposes and is not limiting.

Following block 310 is block 315, in which, at least for some application services 110a-110n, the message execution path and/or application service operations are validated prior to completing execution of the application service 110a-110n being executed. According to one embodiment, the operations of block 315 are performed for at least one of the application services 110a-110n being executed to detect fraud prior to completion of the respective application service 110a-110n, but need not be performed for every application service 110a-110n executed while performing the software-based operation. For example, in one embodiment, the operations of block 315 are performed prior to execution of the application service endpoint, which may be defined as the last application service 110a-110n to be executed for a given software-based operation. Thus, performing fraud detection prior to execution of the application service endpoint may allow detecting any potential fraudulent messages and/or operations prior to completing the software-based operation. In other embodiments, however, the operations of block 315 may be performed in association with the execution of one or more other application services 110a-110n, in addition to, or instead of, the application service endpoint. For those application services 110a-110n that are not to be authorized at block 315, audit log files may still be collected at block 310 for subsequent analysis, in some embodiments.

According to one embodiment, the operations of block 315 may generally include analyzing the audit log information previously generated during the execution of prior application services in the execution path to define the preceding execution path for the software-based operation being performed. This execution path may then be compared to the one or more predetermined expected execution paths stored in association with the software-based operation to determine if the actual execution path satisfies (e.g., performs the same or equivalent operations) the expected execution path. If the expected execution path is not satisfied (e.g., one or more operations or messages are generated that are not defined by the expected execution path), then it may be determined that potential fraudulent activity has occurred and subsequent actions to be performed, such as at block 330 below.

In one example embodiment, programming instructions associated with the application service 110a-110n being executed may perform, at least in part, the analysis of the audit log information and the comparison to the expected execution path or paths for the specific software-based operation. For example, the application service 110a-110n may be programmed to retrieve previously generated audit log information and expected execution path information, such as from a message assurance server 120 over a network 115, and perform the comparison locally by the application service 110a-110n being executed. As another example, the application service 110a-110n may initiate a request for authorization over the network 115 to the message assurance server 120, which includes programming instructions (e.g., a fraud detection module 135, etc.) that enables responding with an indication of whether the expected execution path was satisfied or not satisfied and, thus, whether the application service 110a-110n can continue or should handle the potential fraud as an exception. As yet another example, control over the application services 110a-110n of the software-based operation is managed centrally, such that no additional programming is required for the individual application services 110a-110n. In this example, centralized review and authorization can be performed centrally, such as by the message assurance server 120, prior to returning control over the software-based operation to the respective application service 110a-110n.

The comparison operations performed at block 315 may be performed according to any number of suitable methods, including, but not limited to, on or more of: comparing previously executed application service identifiers to application service identifiers defmed by the expected execution path or paths; comparing system application identifiers to system application identifiers defined by the expected execution path or paths; comparing computer system identifiers to computer system identifiers defined by the expected execution path or paths; comparing software module identifiers to software module identifiers defined by the expected execution path or paths; comparing message content to expected message content defined by the expected execution path or paths; comparing user identifiers to user identifiers defined by the expected execution path or paths and/or to user privilege information; and the like. As previously described, expected execution path information may be retrieved according to associations with one or more of the following information contained in, or otherwise made available via, the audit log information: an application service identifier; a system application identifier; a software-based operation identifier; or other programming instructions or software information unique to the operation being performed. It is appreciated that the aforementioned operations regarding block 315 are provided for illustrative purposes and are not limiting.

Block 320 may optionally follow block 315, according to various embodiments. At block 320, a time interval, which is defined as the time duration between the execution of two different application services 110a-110n, can be compared to time interval threshold information also defmed by the expected execution path or path for the associated software-based operation. Time intervals may be determined by time stamp information provided as part of the audit log information, whereby the difference between two time stamps would define an approximate time interval representing the elapsed duration between the execution of the two application services 110a-110n. As described, one or more time interval thresholds may be defined for a particular software-based operation, such that during the sequence of executing multiple application services 110a-110n, one or more interval thresholds are expected to be met. Time interval thresholds may be, but are not required to be, defined between two contiguous operations (e.g., between a first operation and the immediately subsequent operation to be executed), or between two non-contiguous operations, such as between two applications services 110a-110n for which one or more intermediate application services are executed. If the audit log and execution path information indicate that at least one of the time interval thresholds associated with the expected execution path information is not satisfied (e.g., the duration between the two application services exceeded the time interval threshold), then it may be determined that a potential fraudulent operation occurred. In the same or similar manner as the operations performed at block 315, the operations of block 320 can be performed in part by the application service 110a-110n being executed, by the assurance message server 120 (or other centralized system), by another associated computer system and associated programming instructions, or by any combination thereof. Moreover, according to one embodiment, the operations of block 315 and 320 need not be performed separately, but instead may be performed as part of the same operation, analyzing one or both of execution path information or time interval information. It is further appreciated that, in some embodiments, only the operations of block 315 are performed, while in other embodiments, only the operations of block 320 are performed.

Following block 320 is decision block 325, in which it is optionally determined whether the operations and/or messages associated with the execution of the application service 110a-110n being executed are authorized. In one embodiment, the operations of decision block 325 (and blocks 315-320) may only be performed for one or a subset of application services 11a-110n, such as for an application service endpoint and/or for any other sensitive or critical application services 110a-110n. According to these embodiments, if an application service 110a-110n is being executed for which authorization is not to be performed, then audit log information is collected at block 310 and operations continue to decision block 335. However, if an application service 110a-110n is being executed for which authorization is to be performed, the execution path and/or time interval analyses can be performed according to the expected execution path and the time interval threshold information, as described. If the execution path for the actual software-based operation being performed satisfies at least one of the one or more expected execution paths associated with the software-based operation, and/or if the time interval or intervals do not exceed the time interval threshold or thresholds, then operations are authorized and may continue to decision block 335. However, if the execution path does not satisfy at least one the expected execution paths or if the time interval or intervals do not satisfy the time interval thresholds for the software-based operation, then it may be determined that the operations and/or messages are potentially fraudulent and an exception raised at block 330.

At block 330, after a determination that a potential fraud may have occurred, the exception can be handled as desired. In one embodiment, the operations of the application service 110a-110n are halted (e.g., command sent to the respective application service 110a-110n preventing operation, etc.). In one embodiment, one or more fraud alert messages can be generated, such as to identify the software-based operation and to indicate the reason for the potential fraud (e.g., what aspect of the execution path was not performed and/or what time interval threshold was violated, etc.) and optionally identify any user associated therewith. Fraud alert messages can be stored in memory (e.g., for subsequent retrieval, analysis, and/or reporting, etc.) and/or transmitted to one or more system users (e.g., electronically, email, Internet communications, wireless communications, short message service, multimedia message service, telephone call, pager messaging service, etc.), allowing for an appropriate response as desired. It is appreciated that the exception generated at block 330 upon the detection of a potential fraudulent activity may be handled according to various other suitable means, as desired, which may differ by implementation, and that the aforementioned examples are not limiting.

If, however, at decision block 325, it is determined that the operations are valid and authorized (e.g., satisfying at least one expected execution path and/or satisfying the respective time interval thresholds, etc.), then operations continue to decision block 335. At decision block 335, it is determined whether the software-based operations are complete or if there are remaining application services 110a-110n to be executed (e.g., the execution path for the software-based operation is not complete). If there are additional application services 110a-110n to be executed (e.g., the application service 110a-110n being executed is not the application service endpoint), then the current application service 110a-110n is allowed to be executed and operations repeat to block 305, in which the next application service 110a-110n is executed. Audit log information is collected and execution path and/or time intervals are optionally validated for the next (and subsequent) application services 110a-110n in the same or similar manner as described with reference to blocks 305-335. However, if, at decision block 335, it is determined that the software-based operations are complete (e.g., at the application service endpoint), then operations continue to block 340 in which the application service endpoint is permitted to be executed and the software-based operations completed.

The method 300 may end after block 340, having collected audit log information and analyzed execution path and/or time intervals for a software-based operation.

With continued reference to FIG. 3, a specific illustrative example is now provided. According to this example, an example software-based operation may include four application services 110a-110d, with application service 110d being the application service endpoint. According to this example and for the sake of illustration, authorization is only to be performed for the application service endpoint 110d. Accordingly, at block 305, the software-based operation would begin by executing application service 110a. At block 310, audit log information pertaining to application service 110a would be generated and transmitted to a message assurance server 120 for storing and subsequent analysis. Blocks 310-330 are not completed for application service 110a because authorization is not to be performed according to this illustrative example. Thus, at decision block 335 it is determined that additional application services 110b-110d are to be executed and that the software-based application is not complete. Thus, operations repeat back to block 305, 310, and 335 for application services 110b-110c, collecting audit log information for each of the application services 110b-110c. Audit log information may be collected prior to the execution of the respective application service 110a-110d, concurrent with the execution of the respective application service 110a-110d, or after the execution of the respective application service 110a-110d.

When the operations repeat back to block 305 for application service endpoint 110d, audit log information is generated and transmitted at block 310 in the same or similar manner as for each of the preceding application services 110a-110c. However, because the application service endpoint 110d is now being executed, and authorization is to be performed for the application service endpoint 110d in this example, blocks 315-325 are performed. At block 315, the audit log information previously generated and collected for the software based operation is retrieved and analyzed. The audit log information will define the execution path for this particular software-based operation, which includes application services 110a, 110b, 110c, 110d. If each of these (and, optionally, in this order) are defined by the expected execution path for the software-based operation, then operations can continue to block 335 in which operations proceed to block 340, allowing the application service 110d to be executed and this software-based operation completed. However, if one or more of application services 110a, 110b, 110c, 110d are not defined by the expected execution path, or if other application services defined by the expected execution path were not performed, then it indicates that the operations previously executed may include some fraudulent activity by either skipping operations or performing additional operations that were not defined or expected for the particular software-based operation. In this case, an exception would be generated at block 330 and handled accordingly.

Accordingly, the embodiments described herein provide systems and methods for detecting fraud associated with systems application processing. Certain embodiments provide the technical effects of proactively performing message and operation assurance, reducing the chances of effective security breaches within a distributing computing system. More specific technical effects include the ability to verify the exact operations of a system application or applications and the associated execution paths to identify potential fraud, including validating what operations were executed, what paths the messages took, who sent the messages or executed the operations, how long the individual operations took, and the like. These embodiments provide a technical effect of increasing the ability to prevent message replay attacks, message interception, system impersonation, and or other fraudulent activities for software-based messaging and operations at various points along an execution path and before final execution. A further technical effect results from the creation of a centralized system operable to monitor and authorize software-based messaging and operations within a distributed computing environment, and logging and/or notification of the same.

The invention is described above with reference to block and flow diagrams of systems, methods, apparatus, and/or computer program products according to example embodiments of the invention. It will be understood that one or more blocks of the block diagrams and flow diagrams, and combinations of blocks in the block diagrams and flow diagrams, respectively, can be implemented by computer-executable program instructions. Likewise, some blocks of the block diagrams and flow diagrams may not necessarily need to be performed in the order presented, or may not necessarily need to be performed at all, according to some embodiments of the invention.

These computer-executable program instructions may be loaded onto a general purpose computer, a special purpose computer, a processor, or other programmable data processing apparatus to produce a particular machine, such that the instructions that execute on the computer, processor, or other programmable data processing apparatus create means for implementing one or more functions specified in the flow diagram block or blocks. These computer program instructions may also be stored in a computer-readable memory that can direct a computer or other programmable data processing apparatus to function in a particular manner, such that the instructions stored in the computer-readable memory produce an article of manufacture including instruction means that implement one or more functions specified in the flow diagram block or blocks. As an example, embodiments of the invention may provide for a computer program product, comprising a computer usable medium having a computer-readable program code or program instructions embodied therein, said computer-readable program code adapted to be executed to implement one or more functions specified in the flow diagram block or blocks. The computer program instructions may also be loaded onto a computer or other programmable data processing apparatus to cause a series of operational elements or steps to be performed on the computer or other programmable apparatus to produce a computer-implemented process such that the instructions that execute on the computer or other programmable apparatus provide elements or steps for implementing the functions specified in the flow diagram block or blocks.

Accordingly, blocks of the block diagrams and flow diagrams support combinations of means for performing the specified functions, combinations of elements or steps for performing the specified functions and program instruction means for performing the specified functions. It will also be understood that each block of the block diagrams and flow diagrams, and combinations of blocks in the block diagrams and flow diagrams, can be implemented by special purpose, hardware-based computer systems that perform the specified functions, elements or steps, or combinations of special purpose hardware and computer instructions.

While the invention has been described in connection with what is presently considered to be the most practical and various embodiments, it is to be understood that the invention is not to be limited to the disclosed embodiments, but on the contrary, is intended to cover various modifications and equivalent arrangements included within the spirit and scope of the appended claims.

This written description uses examples to disclose the invention, including the best mode, and also to enable any person skilled in the art to practice the invention, including making and using any devices or systems and performing any incorporated methods. The patentable scope of the invention is defined in the claims and may include other examples that occur to those skilled in the art. Such other examples are intended to be within the scope of the claims if they have structural elements that do not differ from the literal language of the claims, or if they include equivalent structural elements with insubstantial differences from the literal language of the claims.

## Claims

1. A method for detecting fraud associated with systems application processing, comprising:
executing a software-based operation causing execution of a plurality of application services, each associated with a respective one of one or more system applications (105a-105n), wherein the execution of the plurality of application services (110a-110n) defines an execution path for the software-based operation;
generating an audit log (130) for each of at least a subset of the plurality of application services (110a-110n) in association with the execution of the respective application service to at least partially represent the execution path for the software-based operation; and
prior to execution of at least one of the plurality of application services (110a-110n), analyzing each of the audit logs (130) previously generated while executing the software-based operation to determine whether the execution path for the software-based operation satisfies at least one predefined expected execution path.

2. The method of claim 1, wherein the one or more system applications (105a-105n) comprise a plurality of system applications (105a-105n), and wherein at least a first subset of the plurality of application services (110a-110n) is associated with a first system application and at least a second subset of the plurality of application services (110a-110n) is associated with a second system application.

3. The method of claim 1 or 2, wherein an audit log (130) is generated for each of the plurality of application services (110a-110n).

4. The method of claim 2, wherein an audit log (130) is generated for a subset of the plurality of application services (110a-110n).

5. The method of any of claims 1 to 4, further comprising transmitting each audit log (130) over a network (115) to a message assurance server (120) for analyzing.

6. The method of any of claims 1 to 5, wherein analyzing each of the audit logs (130) previously generated is performed prior to execution of an application service endpoint for one of the one or more system applications (105a-105n).

7. The method of claim 6, wherein analyzing each of the audit logs (130) previously generated is additionally performed for at least one additional application service of the plurality of application services (110a-110n).

8. The method of any preceding claim, wherein, prior to execution of one of the plurality of application services (110a-110n), analyzing each of the audit logs (130) previously generated further comprises determining that the execution path for the software-based operation does not satisfy at least one predefined expected execution path.

9. The method of claim 8, further comprising stopping execution of the one of the plurality of application services (110a-110n) in response to determining that the execution path for the software-based operation does not satisfy the at least one predefined expected execution path.

10. The method of claim 8 or 9, further comprising generating a potential fraud alert message (135) in response to determining that the execution path for the software-based operation does not satisfy the at least one predefined expected execution path.

11. The method of any preceding claim, wherein analyzing each of the audit logs (130) previously generated comprises comparing at least one time interval defined by an approximate duration between execution of at least two of the plurality of application services (10a-110n) to a predetermined time interval threshold.

12. A system (100) for detecting fraud associated with systems application processing, comprising:
a message assurance server (120) comprising at least one processor and in communication over a network (115) with at least one system application (105a-105n) comprising a plurality of application services (110a-110n) for performing at least one software-based operation, wherein the message assurance server (120) is operable to:
for each of at least a subset of the plurality of application services (110a-110n), receive an audit log message indicating a respective point in an execution path associated with execution of the plurality of application services (110a-110n); and
analyze each of the received audit logs (130) prior to executing at least one of the plurality of application services (110a-110n) to determine whether the execution path for the software-based operation satisfies at least one predefined expected execution path.

13. The system of claim 12, wherein the plurality of application services (110a-110n) are associated with a plurality of system (105a-105n) applications, and wherein at least a first subset of the plurality of application services is associated with a first system application and at least a second subset of the plurality of application services is associated with a second system application.

14. The system of claim 12 or 13, wherein, prior to execution of one of the plurality of application services, when analyzing each of the audit logs previously generated the message assurance server is operable to:
determine that the execution path for the software-based operation does not satisfy at least one predefined expected execution path; and

15. The system of claim 12, 13 or 14, wherein, when analyzing each of the audit logs (130) previously generated the message assurance server (120) is operable to: compare at least one time interval defined by an approximate duration between execution of at least two of the plurality of application services (110a-110n) to a predetermined time interval threshold.
